# EUROPÄISCHE PATENTSCHRIFT

(11) **EP 3 104 736 B1**
(45) Veröffentlichungstag und Bekanntmachung des Hinweises auf die Patenterteilung: **12.09.2018**
(21) Anmeldenummer: 15704995.8
(22) Anmeldetag: 10.02.2015
(51) Int. Cl.: B60R 22/28, A44B 11/25

(54) **GURTSCHLOSS FÜR EIN SICHERHEITSGURTSYSTEM**
BELT BUCKLE FOR A SAFETY BELT SYSTEM
CEINTURE DE SÉCURITÉ POUR SYSTÈME DE CEINTURE DE SÉCURITÉ

(30) Priorität: 12.02.2014 DE 102014101730
(43) Veröffentlichungstag der Anmeldung: 21.12.2016
(73) Patentinhaber: Autoliv Development AB, 447 83 Vårgårda (SE)
(72) Erfinder: PLACZEK, Melanie, 25355 Barmstedt (DE); LEGDE, Dietmar, 22457 Hamburg (DE)
(74) Vertreter: Feucker, Max Martin
(86) Internationale Anmeldenummer: PCT/EP2015/052713
(87) Internationale Veröffentlichungsnummer: WO 2015/121232

(56) Entgegenhaltungen:
- DE-B3-102008 022 675
- DE-U1-202007 011 066

## Beschreibung

Die vorliegende Erfindung betrifft ein Gurtschloss für ein Sicherheitsgurtsystem mit einem federbelasteten, einen Sicherungsstift umfassenden Riegelmechanismus zur Verriegelung einer in ein Schlossgehäuse eingeschobenen Gurtzunge und mit einer mit einem Rahmen an dem Schlossgehäuse unter Federwirkung verschiebbar geführten Drucktaste zum für das Entriegeln des Gurtschlosses erforderlichen Beaufschlagen des Riegelmechanismus, wobei in dem Rahmen eine mindestens einen Berührungsbereich aufweisende Aufnahme zur Führung und/oder Halterung des bei einer Betätigung des Gurtschlosses mit dem Berührungsbereich in Kontakt kommenden Sicherungsstiftes ausgebildet ist. DE102008022675 offenbart ein Gurtschloss für ein Sicherheitsgurtsystem zur Verriegelung einer Gurtzunge mit einem Riegelmechanismus und einem den Riegelmechanismus in Schließrichtung belastenden Federelement, wobei ein gegen die Schließrichtung des Riegelmechanismus wirkendes Dämpfungselement vorgesehen ist.

Aus der US 4,454,634 ist beispielsweise ein Gurtschloss bekannt, welches einen Riegelmechanismus aufweist, der in Schließrichtung federbelastet ist. Die an dem Riegelmechanismus anliegende Feder ist derart angeordnet, dass sie den Riegelmechanismus in nicht eingeschobenem Zustand der Gurtzunge in Öffnungsrichtung und bei eingeschobener Gurtzunge in Schließrichtung federbelastet. Für die Funktionsfähigkeit des Riegelmechanismus ist dadurch nur eine Feder erforderlich. Durch das Einschieben der Gurtzunge ändert sich die Zuordnung der Teile des Riegelmechanismus zueinander und damit die Ausrichtung der Feder, so dass der Riegelmechanismus während der Schließbewegung aus der Entriegelungsstellung in die Verriegelungsstellung eine sich durch einen Neutralstellung laufende, ändernde Federbelastung erfährt. In der Verriegelungsstellung wird ein Riegel durch einen Sicherungsstift in Eingriff mit der Gurtzunge gehalten. Der Sicherungsstift wiederum ist in einer L-förmigen Kulissenführung in einem Schlossgehäuse geführt. Die Enden des Sicherungsstiftes befinden sich jederzeit jeweils in einer in einem Rahmen einer Drucktaste ausgebildeten Aufnahme.

Bei einem Schließvorgang wird der Sicherungsstift in der Aufnahme in dem Rahmen bewegt, wobei nach einem selbsttätigen Zuschnappen des Riegels nach einem Überschreiten der Neutralstellung der Feder der Sicherungsstift an dem Rahmen zur Anlage kommt. Zum Öffnen des Gurtschlosses wird bei einer Betätigung der Drucktaste der Sicherungsstift von dem Rahmen der Drucktaste gegen die Federbelastung in der L-förmigen Kulissenführung bewegt. Über den Riegelmechanismus wird die Feder durch den Sicherungsstift bis in ihre Neutralstellung gefahren, wonach ein selbsttätiges Öffnen des Gurtschlosses stattfindet.

Beim Schließen und Öffnen des Gurtschlosses kann es vorkommen, dass der Sicherungsstift an Berührungsflächen an der Aufnahme der Drucktaste aufgrund der von der Feder nach Überschreiten der Neutralstellung ausgelösten Bewegung anschlägt, was unerwünschte Geräusche verursacht.

Zudem wurde festgestellt, dass der Sicherungsstift sowohl in der Ver- wie in der Entriegelungsstellung während der Fahrt an dem Berührungsbereich der Drucktaste anschlagen kann, was zusätzliche Geräusche erzeugt.

Aufgrund der erhöhten Anforderungen in modernen Kraftfahrzeugen an die Akustikverhältnisse im Innenraum ist es wünschenswert, die entstehenden Geräusche beim Ver- und Entriegeln des Gurtschlosses, sowie während der Fahrt soweit wie möglich zu reduzieren.

Aufgabe der vorliegenden Erfindung ist es daher, die mit Bezug zum Stand der Technik geschilderten Probleme zumindest teilweise zu lösen und insbesondere ein Gurtschloss anzugeben, dass beim Ver- und Entriegeln des Riegelmechanismus und auch in der Ver- und Entriegelungsstellung die Geräuschemission verringert wird.

Gelöst werden diese Aufgaben durch ein Gurtschloss mit den Merkmalen des unabhängigen Anspruches. Vorteilhafte Ausgestaltungen des Gurtschlosses sind in den abhängigen Ansprüchen und in der Beschreibung angegeben, wobei Merkmale dieser vorteilhaften Ausgestaltungen in technologisch sinnvoller Weise beliebig miteinander kombinierbar sind.

Gelöst wird diese Aufgabe insbesondere dadurch, dass der mindestens eine Berührungsbereich der an der Drucktaste ausgebildeten Aufnahme ein schalldämpfendes Element umfasst.

Der Riegelmechanismus umfasst insbesondere eine oder mehrere Federn, einen die Gurtzunge in der Verriegelungsstellung festlegenden, an dem Schlossgehäuse schwenkbar gelagerten Riegel, einen den Riegel in der Verriegelungsstellung sichernden Sicherungsstift, sowie einen federbelasteten Hebel, der mit dem Sicherungsstift zusammenwirkt. Ferner ist ein mit der Gurtzunge zusammenwirkender Auswerfer vorgesehen. Der Hebel ist insbesondere so an dem von der Schlosszunge betätigten Auswerfer schwenkbar gelagert, dass die an dem Hebel angreifende Feder den Hebel bei einem Ent- bzw. Verriegelungsvorgang aus der Neutralstellung entweder in die Verriegelungsstellung oder Entriegelungsstellung belasten kann. Der Hebel ist dabei so angeordnet, dass er den Sicherungsstift in der Verriegelungsstellung so hält, dass der Sicherungsstift den Riegel in der Verriegelungsstellung festlegt. Bezüglich der genaueren Funktion des Riegelmechanismus sei auf die eingangs erwähnte US 4,454,634 verwiesen, auf die hier vollumfänglich in Bezug auf die Funktion der Bestandteile des Riegelmechanismusses Bezug genommen wird. Ferner ist in diesem Zusammenhang die DE 10 2008 022 675 B3 der Anmelderin zu nennen, auf die ebenfalls vollumfänglich in Bezug auf die Funktion des Riegelmechanismusses Bezug genommen wird.

Die Drucktaste umfasst einen Bereich, welcher zum Entriegeln betätigt wird, sowie einen Rahmen, der außen an dem Schlossgehäuse verschoben wird. In dem Rahmen ist eine Aufnahme ausgebildet, in der der Sicherungsstift angeordnet ist und in der der Sicherungsstift gegebenenfalls bewegt wird. Durch Betätigen der Drucktaste zum Entriegeln des Gurtschlosses kann der Sicherungsstift insbesondere aufgrund seiner Anlage an dem Rahmen relativ zu dem Schlossgehäuse und somit auch relativ zu den übrigen Elementen des Riegelmechanismusses bewegt werden. Andererseits kann beim Einschieben der Gurtzunge in das Gurtschloss der Sicherungsstift in der Aufnahme in dem Rahmen relativ zu dem Rahmen bewegt werden. In der Regel liegt der Sicherungsstift in der Verriegelungsstellung an dem Rahmen an. Die Stellen, an denen der Sicherungsstift mit dem die Aufnahme begrenzenden Bereich des Rahmens in Kontakt kommt, und die an diese Stellen angrenzenden Bereiche werden als Berührungsbereich verstanden.

Die vorliegende Erfindung zeichnet sich nun dadurch aus, dass der mindestens eine Berührungsbereich ein schalldämpfendes Element umfasst. Ein schalldämpfendes Element ist insbesondere ein solches Element, welches bei Beaufschlagung des Sicherungsstiftes auf den Berührungsbereich die kinetische Energie des Sicherungsstiftes und/oder der Drucktaste zumindest teilweise absorbiert, so dass eine schallerzeugende Vibration des Sicherungsstiftes, der Drucktaste und/oder eines weiteren Elementes der Gurtschlosses gedämpft ist. Durch die vorgeschlagene Anordnung des schalldämpfenden Elementes wird die Geräuschemission des Gurtschlosses bei der Ver- und Entriegelung reduziert. Ferner wird dadurch erreicht, dass Klappergeräusche, insbesondere eines verriegelten Gurtschlosses, während der Fahrt vermindert sind.

Gemäß einer Ausgestaltung des Gurtschlosses ist das schalldämpfende Element aus einem auf die Aufnahme aufgebrachten Material gebildet, welches den Aufschlag des Sicherungsstiftes auf den Berührungsbereich dämpft. Das schalldämpfende Element besteht also aus einem von dem Material der Drucktaste sich unterscheidenden Material. Das schalldämpfende Material kann entweder nach der Herstellung der Drucktaste auf den Berührungsbereich aufgebracht werden oder es kann bei der Herstellung der Drucktaste an dieser befestigt werden, beispielsweise in einem Zwei-Komponenten-Spritzvorgang.

Hierbei ist insbesondere vorgesehen, dass das schalldämpfende Material so angeordnet ist, dass es bei der Betätigung des Gurtschlosses direkt mit dem Sicherungsstift in Kontakt kommt. Die Stelle, an der der Sicherungsstift mit dem Rahmen in Kontakt kommt, ist also aus dem schalldämpfenden Material. Die kinetische Energie des Sicherungsstiftes kann somit unmittelbar, zumindest teilweise von dem schalldämpfenden Material absorbiert werden.

Es wird insbesondere als vorteilhaft angesehen, wenn sich das schalldämpfende Material bei einer Beaufschlagung mit dem Verriegelungsstift verformt und so die kinetische Energie des Sicherungsstiftes absorbiert. Ein solches schalldämpfendes Material kann beispielsweise aus einem Gummi oder weichem Kunststoff bestehen.

Alternativ ist vorgesehen, dass das schalldämpfende Element ein Federelement ist. Im Gegensatz zu der zuvor beschriebenen Ausführungsform ist also vorgesehen, dass nicht ein Bereich des Berührungsbereiches ein schalldämpfendes Material umfasst, sondern dass ein Element ausgebildet ist, welches durch den Sicherungsstift aus seiner Ruhelage ausgelenkt wird, um so die kinetische Energie des Sicherungsstiftes bzw. der Drucktaste zu absorbieren. Ein solches Federelement ist zumindest an einer Seite an dem Rahmen der Drucktaste angebracht und wird insbesondere direkt von dem Sicherungsstift beaufschlagt, so dass sich das Federelement als Ganzes verformt. Das Federelement kann insbesondere aus demselben Material wie die Drucktaste selbst sein und somit gleichzeitig mit der Herstellung der Drucktaste ausgebildet werden. Ein zusätzlicher Verarbeitungsschritt wäre somit nicht notwendig.

Bei einer Ausführungsform des Gurtschlosses wird das Federelement bei einer Beaufschlagung des Berührungsbereichs mit dem Sicherungsstift quer zu seiner Längserstreckung ausgelenkt, so dass das Federelement die kinetische Energie absorbieren kann, auch wenn der Sicherungsstift an einer anderen als sonst üblichen Stelle auf den Berührungsbereich aufschlägt.

Als vorteilhaft wird angesehen, dass zwei Federelemente vorgesehen sind, die den Sicherungsstift in einer Verriegelungsstellung des Gurtschlosses zwischen sich aufnehmen. Das bedeutet, dass insbesondere zwei sich längserstreckende Federelemente im Wesentlichen parallel zueinander angeordnet sind, die durch den Sicherungsstift quer zu der Längserstreckung ausgelenkt werden. Eine Dämpfung der kinetischen Energie erfolgt somit in zwei entgegengesetzte Richtungen, wodurch eine noch größere Geräuschreduktion erreicht werden kann.

Für eine einfache Herstellung ist vorgesehen, dass das schalldämpfende Element und der Rahmen stoffschlüssig oder einstückig hergestellt sind.

Es kann allerdings auch vorgesehen sein, dass das schalldämpfende Element nach der Herstellung des Rahmens an diesem angebracht wurde, was den Vorteil hat, dass das schalldämpfende Element nur an einzelnen Gurtschlössern einer Produktionsreihe vorgesehen sein kann.

Gemäß einer Ausgestaltung des Gurtschlosses ist zudem vorgesehen, dass der Sicherungsstift in einer L-förmigen Kulissenausnehmung in dem Schlossgehäuse geführt ist. Bei Gurtschlössern mit einer L-förmigen Kulissenausnehmung in dem Schlossgehäuse weist der Sicherungsstift beim Verriegeln des Gurtschlosses regelmäßig eine hohe kinetische Energie auf, welches zu einer hohen Geräuschemission ohne schalldämpfendes Element führen würde.

Die Erfindung sowie das technische Umfeld werden nachfolgend anhand der Figuren beispielhaft erläutert, wobei darauf hingewiesen werden soll, dass die Figuren vorteilhafte Ausgestaltungen der Erfindung zeigen, diese jedoch nicht darauf beschränkt ist. Es zeigen schematisch:
- Fig. 1:: ein Längsschnitt durch ein Gurtschloss,
- Fig. 2:: eine Detailansicht eines Gurtschlosses,
- Fig. 3:: eine Aufnahme mit einem schalldämpfenden Material,
- Fig. 4:: die Aufnahme aus Fig. 3 in einer anderen Ansicht,
- Fig. 5:: eine Aufnahme mit einem Federelement und
- Fig. 6:: eine Detailansicht der Aufnahme mit Federelement.

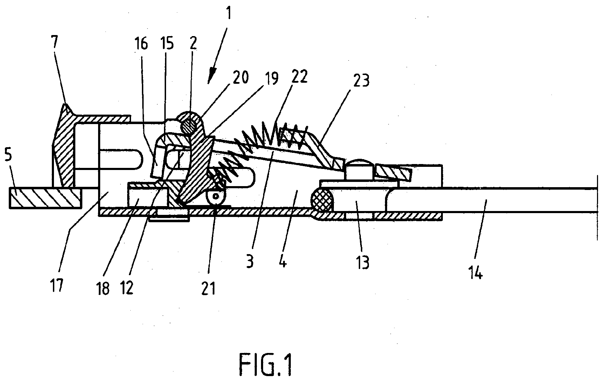

In Fig. 1 ist ein im Stand der Technik bekanntes Gurtschloss 1 mit den folgenden Bauteilen zu erkennen, einem Schlossgehäuse 4, einem in dem Schlossgehäuse 4 angeordneten Riegelmechanismus 3 zum Verriegeln einer Gurtzunge 5 und einem mittels eines Befestigungsbolzens 13 an dem Schlossgehäuse 4 befestigten Halteelement 14 zur Befestigung an einem Kraftfahrzeug. Der Riegelmechanismus 3 ist über eine verschiebbar an dem Schlossgehäuse 4 gelagerte Drucktaste 7 lösbar. Der Riegelmechanismus 3 umfasst einen schwenkbar an dem Schlossgehäuse gelagerten Riegel 15, welcher eine in Richtung der Gurtzunge 5 abgekröpfte Nase 16 aufweist, die bei verriegelter Gurtzunge 5 in einer Ausnehmung der Gurtzunge 5 lasttragend eingreift. Die Gurtzunge 5 ist in einem Einschubkanal 17 des Schlossesgehäuses 4 einschiebbar und bewegt beim Einschieben einen Auswerfer 18 gegen eine Federkraft in dem Einschubkanal 17 bis zum Erreichen der Verriegelungsposition. Die Bewegung des Riegels 15 wird dabei über einen Sicherungsstift 2 kontrolliert, welcher wiederum in einer L-förmigen Kulissenausnehmung 12 in dem Schlossgehäuse 4 geführt ist. Ferner ist ein Kipphebel 19 vorgesehen, welcher mit einem Finger 20 den Sicherungsstift 2 umfasst und mit einem Eingriffabschnitt 21 aus Sicht der Gurtzunge 5 an der Hinterseite des Auswerfers 18 in diesen eingreift. Der Kipphebel 19 ist über eine erste Feder 22 an einem Ansatz 23 des Riegels 15 federvorgespannt gehalten. Die Feder 22 stützt sich in der in Fig. 1 dargestellten Stellung mit einem Ende in Auswurfrichtung der Gurtzunge 5 an dem Auswerfer 18 und mit dem anderen Ende an dem Riegel 15 derart ab, dass beide Teile in Richtung Offenstellung des Riegelmechanismus 3 federbelastet sind. Beim Einführen der Gurtzunge 5 in den Einschubkanal 17 wird der Auswerfer 18 entgegen der von der Feder 22 ausgeübten Federkraft in Richtung Verriegelungsposition verschoben, wobei sich der Kipphebel 19 entgegen dem Uhrzeigersinn dreht. Dabei ändert sich die Ausrichtung der Feder 22 und damit die wirkende Federkraft, so dass die Feder 22 ab dem Überschreiten einer Neutralstellung mit zunehmender Federkraft den Riegelmechanismus 3 in Schließrichtung federbelastet. Durch die Drehbewegung des Kipphebels 19 wird das an ihm anliegende Ende der Feder 22 nach oben bewegt und drückt dann den Riegel 15 ebenfalls unter Ausführung einer Schwenkbewegung entgegen dem Uhrzeigersinn in die Verriegelungsstellung, in der dieser in einer Ausnehmung der Gurtzunge 5 eingreift und dadurch diese verriegelt. Während der Schließbewegung des Riegelmechanismus 3 wird der Sicherungsstift 2 unter Ausführung einer Vertikal- und einer sich anschließenden Horizontalbewegung in die vordere Stellung der L-förmigen Kulissenausnehmung 12 bewegt und sichert den Riegel 15 dadurch in der Verriegelungsstellung. Da die von der Feder 22 ausgeübte Federkraft in Richtung Verriegelungsstellung des Riegelmechanismus 3 ab dem Überschreiten der Neutralstellung stetig zunimmt, wird die Schließbewegung beschleunigt und der Riegelmechanismus 3 schnappt zu, wobei mit dem Erreichen der Verriegelungsstellung die Schließbewegung abrupt abgebremst wird. Durch das abrupte Abbremsen der Schließbewegung und des damit verbundene Aufeinandertreffen der Einzelteile des Riegelmechanismus 3 können die unerwünschten Geräusche entstehen, die durch die vorliegende Erfindung reduziert werden sollen.

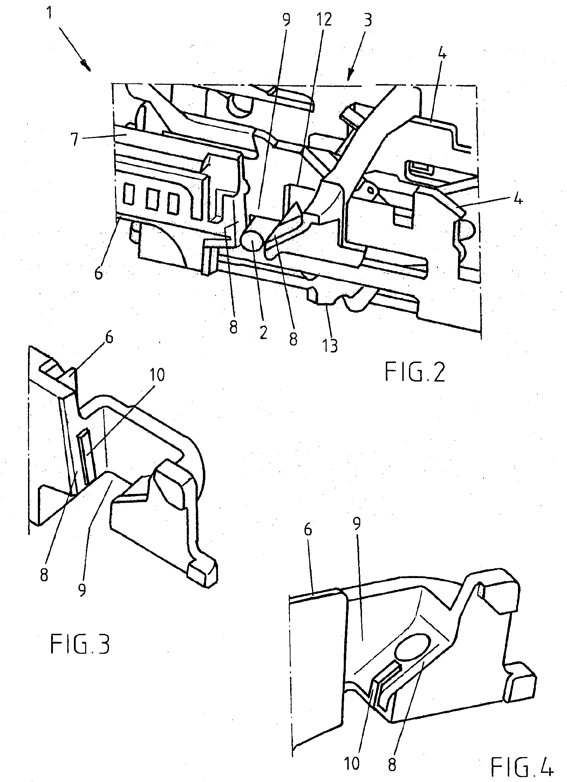

In Fig. 2 ist eine Detailansicht eines Gurtschlosses 1 mit in einem Schlossgehäuse 4 angeordneten Riegelmechanismus 3 dargestellt. In dem Schlossgehäuse 4 ist eine L-förmige Kulissenausnehmung 12 ausgebildet, in welcher ein einen Riegel 15 des Riegelmechanismus 3 in der Verriegelungsstellung festlegender Sicherungsstift 2 geführt ist. In Fig. 2 ist das Gurtschloss 1 in der Verriegelungsstellung gezeigt.

Außen an dem Schlossgehäuse 4 ist eine Drucktaste 7 mit einem Rahmen 6 verschiebbar geführt. In dem Rahmen 6 ist eine Aufnahme 9 ausgebildet, in der der Sicherungsstift 2 angeordnet ist. Zur besseren Darstellung ist in Fig. 2 ein die Aufnahme 9 in axialer Richtung des Sicherungsstiftes 2 begrenzender Teil des Rahmens 6 weggeschnitten. Der Sicherungsstift 2 liegt in einem mit 8 bezeichneten Berührungsbereich an dem die Aufnahme 9 begrenzenden Rahmen 6 an.

In den Fig. 3 und 4 ist die Aufnahme 9 aus Fig. 2 in dem Rahmen 6 der Drucktaste 7 dargestellt. Bei Betätigen des Gurtschlosses 1, also beim Einschieben der Gurtzunge 5 oder beim Entriegeln, kommt der Sicherungsstift 2 in Kontakt mit dem die Aufnahme begrenzenden Rahmen 6 der Drucktaste 7. Die Kontaktstellen und der die Kontaktstellen umgebende Bereich wird als Berührungsbereich 8 aufgefasst. Bei der Ausführungsform der Fig. 3 und 4 ist auf diesen Berührungsbereich 8 ein schalldämpfendes Material 10 aufgebracht. Das schalldämpfende Material 10 absorbiert die kinetische Energie des Sicherungsstiftes 2, wenn dieser auf das schalldämpfende Material 10 auftrifft, so dass die Geräuschemission vermindert ist.

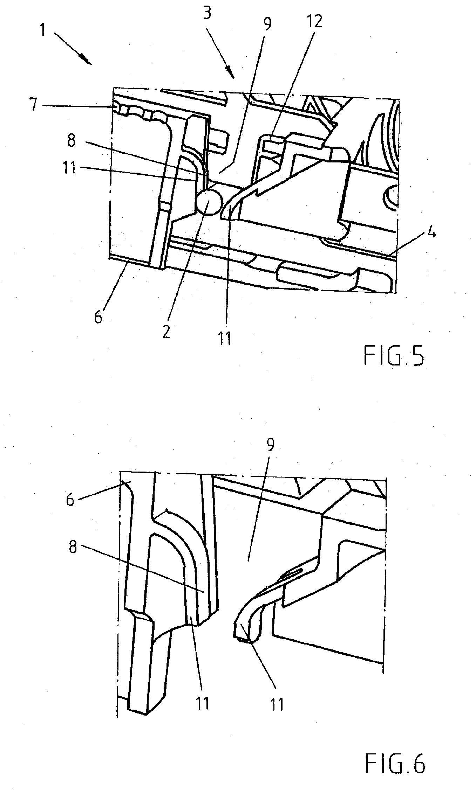

In Fig. 5 ist eine ähnliche Darstellung wie in Fig. 2 gezeigt, wobei sich das dargestellte Gurtschloss 1 lediglich in der Gestaltung des eine Aufnahme 9 begrenzenden Rahmens 6 unterscheidet. Ein in einer L-förmigen Kulissenausnehmung 12 eines Schlossgehäuses 4 geführter Sicherungsstift 2 legt in der Verriegelungsstellung einen Riegel eines Riegelmechanismus 3 fest. Der Sicherungsstift 2 ist zudem in der Aufnahme 9 angeordnet, welche in einem Rahmen 6 einer Drucktaste 7 ausgebildet ist. Die Aufnahme 9 ist in Fig. 6 ohne den Sicherungsstift 2 gezeigt.

In einem Berührungsbereich 8 der Aufnahme 9 sind zwei Federelemente 11 ausgebildet, zwischen denen sich der Sicherungsstift 2 in der Verriegelungsstellung befindet. In der Entriegelungsstellung ist der Sicherungsstift 2 in einem oberen Bereich der Aufnahme 9 angeordnet, während er sich in dem vertikalen Abschnitt der L-förmigen Kulissenausnehmung 12 befindet. Die Federelemente 11 sorgen dafür, dass die kinetische Energie des Sicherungsstiftes 2 beim Betätigen des Gurtschlosses 1 absorbiert wird. Die Federelemente 11 sorgen zudem dafür, dass der Sicherungsstift 2 in der Verriegelungsstellung immer an beiden Federelementen 11 anliegt, so dass es zu keinen Klappergeräuschen kommen kann.

Mit der vorliegenden Erfindung ist der Vorteil verbunden, dass eine Geräuschemission in dem Bereich vermindert wird, in dem der Sicherungsstift 2 an der Drucktaste 7 anliegt.

### Bezugszeichenliste

- 1: Gurtschloss
- 2: Sicherungsstift
- 3: Riegelmechanismus
- 4: Schlossgehäuse
- 5: Gurtzunge
- 6: Rahmen
- 7: Drucktaste
- 8: Berührungsbereich
- 9: Aufnahme
- 10: schalldämpfendes Material
- 11: Federelement
- 12: Kulissenausnehmung
- 13: Befestigungsbolzen
- 14: Halteelement
- 15: Riegel
- 16: Nase
- 17: Einschubkanal
- 18: Auswerfer
- 19: Kipphebel
- 20: Finger
- 21: Eingriffabschnitt
- 22: Feder
- 23: Ansatz

## Patentansprüche

1. Gurtschloss (1) für ein Sicherheitsgurtsystem mit einem federbelasteten, einen Sicherungsstift (2) umfassenden Riegelmechanismus (3) zur Verriegelung einer in ein Schlossgehäuse (4) eingeschobenen Gurtzunge (5) und mit einer mit einem Rahmen (6) an dem Schlossgehäuse (4) unter Federwirkung verschiebbar geführten Drucktaste (7) zum für das Entriegeln des Gurtschlosses (1) erforderlichen Beaufschlagen des Riegelmechanismus (3), wobei in dem Rahmen (6) eine mindestens einen Berührungsbereich (8) aufweisende Aufnahme (9) zur Führung und/oder Halterung des bei einer Betätigung des Gurtschlosses (1) mit dem Berührungsbereich (8) in Kontakt kommenden Sicherungsstiftes (2) ausgebildet ist, **dadurch gekennzeichnet, dass** der mindestens eine Berührungsbereich (8) der an der Drucktaste (7) ausgebildeten Aufnahme (9) ein schalldämpfendes Element (10, 11) umfasst.

2. Gurtschloss (1) nach Anspruch 1, wobei das schalldämpfende Element aus einem auf die Aufnahme (9) aufgebrachten, schalldämpfenden Material (10) gebildet ist, welches den Aufschlag des Sicherungsstiftes (2) auf den Berührungsbereich (8) dämpft.

3. Gurtschloss (1) nach Anspruch 2, wobei das schalldämpfende Material (10) bei der Betätigung des Gurtschlosses (1) direkt mit dem Sicherungsstift (2) in Kontakt kommt.

4. Gurtschloss (1) nach einem der Ansprüche 2 oder 3, wobei sich das schalldämpfende Material (10) bei einer Beaufschlagung mit dem Sicherungsstift (2) verformt.

5. Gurtschloss (1) nach Anspruch 1, wobei das schalldämpfende Element ein Federelement (11) ist.

6. Gurtschloss (1) nach Anspruch 5, wobei das Federelement (11) bei einer Beaufschlagung des Berührungsbereichs (8) mit dem Sicherungsstift (2) quer zu seiner Längserstreckung ausgelenkt wird.

7. Gurtschloss (1) nach Anspruch 6 oder 7, wobei zwei Federelemente (11) vorgesehen sind, die den Sicherungsstift (2) in einer Verriegelungsstellung des Gurtschlosses (1) zwischen sich aufnehmen.

8. Gurtschloss (1) nach einem der vorhergehenden Ansprüche, wobei das schalldämpfende Element (10, 11) und der Rahmen (6) stoffschlüssig oder einstückig hergestellt sind.

9. Gurtschloss (1) nach einem der Ansprüche 1 bis 7, wobei das schalldämpfende Element (10, 11) nach der Herstellung des Rahmens (6) an diesem angebracht wurde.

10. Gurtschloss (1) nach einem der vorhergehenden Ansprüche, wobei der Sicherungsstift (2) in einer L-förmigen Kulissenausnehmung (12) in dem Schlossgehäuse (4) geführt ist.

## Claims

1. Belt buckle (1) for a safety belt system with a latching mechanism (3) for locking a belt tongue (5) into a buckle housing (4) being spring-loaded and comprising a locking pin (2), and with a pushbutton (7) which is supported with a frame (6) so as to be displaceable on the buckle housing (4) under the effect of the spring for applying the force necessary for unlocking the belt buckle (1) to the latching mechanism (3), wherein a seating (9) having at least one contact area (8) is formed in the frame (6) for supporting and/or retaining the locking pin (2) which comes into contact with the contact area (8) when the belt buckle (1) is actuated, **characterized in that** the at least one contact area (8) of the seating (9) formed on the pushbutton (7) comprises a sound damping element (10, 11).

2. Belt buckle (1) according to Claim 1, wherein the sound damping element is made from a sound damping material (10) which is applied to the seating (9) and which attenuates the impact of the locking pin (2) with the contact area (8).

3. Belt buckle (1) according to Claim 2, wherein the sound damping material (10) comes directly into contact with the locking pin (2) when the belt buckle (1) is actuated.

4. Belt buckle (1) according to any one of Claims 2 or 3, wherein the sound damping material (10) is deformed when impinged upon by the locking pin (2).

5. Belt buckle (1) according to Claim 1, wherein the sound damping element is a spring element (11).

6. Belt buckle (1) according to Claim 5, wherein the spring element (11) is deflected transversely to its longitudinal extension when the contact area (8) is impinged upon by the locking pin (2).

7. Belt buckle (1) according to Claim 6 or 7, wherein two spring elements (11) are provided, which hold the locking pin (2) between each other in a locked position of the belt buckle (1).

8. Belt buckle (1) according to any one of the preceding claims, wherein the sound damping element (10, 11) and the frame (6) are produced with a materially bonded connection or as a single part.

9. Belt buckle (1) according to any one of Claims 1 to 7, wherein the sound damping element (10, 11) was attached to the frame (6) after the frame was produced.

10. Belt buckle (1) according to any one of the preceding claims, wherein the locking pin (2) is guided in an L-shaped coulisse recess (12) in the buckle housing (4).

## Revendications

1. Boucle de ceinture (1), pour un système de ceinture de sécurité, dotée d'un mécanisme de verrouillage (3) comprenant une goupille de blocage (2) contrainte par ressort, destiné à verrouiller une languette de ceinture (5) insérée dans un boîtier de boucle (4) et dotée d'une touche d'appui (7) guidée de manière déplaçable sous l'effet d'un ressort par un cadre (6) sur le boîtier de boucle (4), pour la soumission nécessaire du mécanisme de verrouillage (3), pour le déverrouillage de la boucle de ceinture (1) dans le cadre (6) étant conçu un logement (9) comportant au moins une zone de guidage (8), destinée à guider et/ou à maintenir la goupille de blocage (2) entrant en contact avec la zone de contact (8), lors d'un actionnement de la boucle de ceinture (1), **caractérisée en ce que** l'au moins une zone de contact (8) du logement (9) conçu sur la touche d'appui (7) comprend un élément insonorisant (10, 11).

2. Boucle de ceinture (1) selon la revendication 1, l'élément insonorisant étant formé d'une matière (10) insonorisante, appliquée sur le logement (9), laquelle insonorise l'ouverture de la goupille de blocage (2) sur la zone de contact (8).

3. Boucle de ceinture (1) selon la revendication 2, lors de l'actionnement de la boucle de ceinture, la matière insonorisante (10) arrivant directement en contact avec la goupille de blocage (2).

4. Boucle de ceinture (1) selon l'une quelconque des revendications 2 ou 3, la matière insonorisante (10) se déformant lorsqu'elle est soumise à la goupille de blocage (2).

5. Boucle de ceinture (1) selon la revendication 1, l'élément insonorisant étant un élément à ressort (11).

6. Boucle de ceinture (1) selon la revendication 5, lors d'une soumission de la zone de contact (8) avec la goupille de blocage (2), l'élément à ressort (11) étant dévié à la transversale de son extension longitudinale.

7. Boucle de ceinture (1) selon la revendication 6 ou 7, deux éléments à ressort (11) étant prévus qui réceptionnent entre eux la goupille de blocage (2) dans une position de verrouillage de la boucle de ceinture (1).

8. Boucle de ceinture (1) selon l'une quelconque des revendications précédentes, l'élément insonorisant (10, 11) et le cadre (6) étant fabriqués par liaison de matière ou en monobloc.

9. Boucle de ceinture (1) selon l'une quelconque des revendications 1 à 7, l'élément insonorisant (10, 11) ayant été monté sur le cadre (6) après la fabrication de celui-ci.

10. Boucle de ceinture (1) selon l'une quelconque des revendications précédentes, la goupille de blocage (2) étant guidée dans le boîtier de boucle (4) dans un évidement coulissant (12) en forme de L.
